# EUROPEAN PATENT APPLICATION

(11) **EP 4 286 802 A1**
(43) Date of publication of application: **06.12.2023**
(21) Application number: 22461561.7
(22) Date of filing: 02.06.2022
(51) Int. Cl.: G01F 23/16, G01F 23/00, B64D 11/02, E03B 1/04, F15B 15/28, H01H 35/18

(54) **LEVEL SENSOR**

(71) Applicant: Goodrich Corporation, Charlotte, NC 28217 (US)
(72) Inventor: KROCZEK, Piotr, 51-317 Wroclaw (PL); SAPIJA, Dariusz, 51-317 Wroclaw (PL)
(74) Representative: Dehns

(57) **Abstract**

A fluid level sensor assembly comprising includes a tubular housing (100) arranged to be fitted into a fluid flow path of a system between a fluid line an inlet (300) to a valve (1'), wherein the tubular housing (100) defines an axial flow channel (400) extending through the tubular housing from a first end (101) to a second end (102), along an axis A, for fluid to flow from the fluid line of the system to the valve inlet (300), the tubular housing (100) further comprising a sensor channel (500) extending from the second end (102) of the flow channel (400) towards the first end substantially parallel to, and in fluid communication with the axial flow channel (400), wherein the assembly further comprises a first sensor part (600) located in the sensor channel such that the first sensor part can move axially within the sensor channel responsive to pressure of the fluid in the flow channel acting on the first sensor part in the sensor channel, and a second sensor part (700) provided on the tubular housing (100) at an axial position between the second end (102) and the first end (101) selected such that when the fluid pressure is at a predetermined level, the first sensor part is at a position in the sensor channel adjacent the second sensor part such that the first and second sensor parts communicate with each other.

## Description

### TECHNICAL FIELD

The present disclosure is concerned with providing a level sensor assembly for controlling operation of a valve to control fluid flow dependent on the level of fluid sensed by the sensor. The assembly is particularly for mounting a water (or other fluid) level sensor to a flow line that is in communication with a valve, particularly a motorised valve.

### BACKGROUND

There are many applications, in various fields, where a fluid flow is regulated or controlled by opening and closing valves. In water supply or sanitation systems, for example, the flow of water through the system is managed by opening and closing valves to allow, block or direct the flow of water. Manually operated valves may be opened or closed by turning a handle or lever. Many systems use automatic or motorised valves that are opened or closed by means of an electric motor. In some systems, the opening or closing of the valves is dependent on the level of water/other fluid in a part of the system. In some cases, a valve may be arranged to open in response to a water level exceeding a threshold level. In other cases, a valve may be normally open and configured to close in response to the water exceeding a threshold level. One example of the use of automatic valves responsive to water levels is in a so-called grey water system. Grey water is water in a system that has been used but that can be recycled for a different purpose e.g. drinking water or water from a wash basin can be recycled for use in a toilet flushing system. Grey water systems are often used in building complexes or in aircraft. Valves are provided to direct and control the flow of grey water to the flush. Grey water systems are just one example of a system in which a valve is controlled based on a sensed fluid level. Fluid can encompass any liquid, gas or air.

Typical sensors may include a sensor mounted within the flow line of the fluid in the system. Sensors located in the pipes through which the fluid flows can, however, disrupt flow of the fluid. Further, sensors can become contaminated by particles and debris in the fluid. In another known sensor assembly, a conductive sensor device is provided in a branch of a wye fitting, the main channel of which is mounted to the flow channel of the system. When the valve is closed, the fluid accumulates in the main channel of the fitting and when it reaches a certain level, the fluid will flood into the branch of the fitting where the sensor is located. As water is conductive, it will, when it comes into contact with the sensor in the branch, activate the sensor which then sends a signal to the valve to open the valve and to allow the water to flow through the valve out of the flow channel.

Whilst these sensors work well for sensing the level of water, they are relatively large, bulky parts of the system, that add considerably to the weight of the system and take up a relatively large area. Furthermore, they are not suitable for detecting non-conductive fluids and so would not send a signal based on an accurate level detection of fluids other than water. The accuracy of the conductive level sensor would also be adversely affected by contaminants in the water. This means that the valve may remain closed although the level of fluid in the system has exceeded the predetermined fill level. Another problem with such level sensors is that water droplets or small amounts of residual water may remain in the lower part of the wye fitting branch containing the sensor, close to where it branches off from the main channel of the fitting. The conductive sensor may detect the presence of these droplets or water residue and read this as corresponding to the level of water having risen such as to trigger the sensor and the valve may therefore be opened when it should, in fact, remain closed. This can generate an underpressure upstream in the system e.g. in a toilet cabin.

Designers of such fluid management systems face challenges in designing and mounting the level sensors to ensure accurate sensing and, thus, accurate control of the valves.

There is therefore a need for an improved level sensor assembly particularly for use in association with motorised valves.

### SUMMARY

According to one aspect, there is provided a fluid level sensor assembly comprising includes a tubular housing arranged to be fitted into a fluid flow path of a system between a fluid line an inlet to a valve, wherein the tubular housing defines an axial flow channel extending through the tubular housing from a first end to a second end, along an axis A, for fluid to flow from the fluid line of the system to the valve inlet, the tubular housing further comprising a sensor channel extending from the second end of the flow channel towards the first end substantially parallel to, and in fluid communication with the axial flow channel, wherein the assembly further comprises a first sensor part located in the sensor channel such that the first sensor part can move axially within the sensor channel responsive to pressure of the fluid in the flow channel acting on the first sensor part in the sensor channel, and a second sensor part provided on the tubular housing at an axial position between the second end and the first end selected such that when the fluid pressure is at a predetermined level, the first sensor part is at a position in the sensor channel adjacent the second sensor part such that the first and second sensor parts communicate with each other.

Also provided is a fluid management system comprising a valve and an assembly as described above. The assembly may also include a fluid pipe arranged for connection with the valve via the assembly.

Preferred embodiments will now be described, by way of example only, with reference to the accompanying drawings.

### BRIEF DESCRIPTION OF THE DRAWINGS

Figure 1 shows a known valve and water level sensor assembly.
Figure 2 shows, in cross-section, an example of a sensor assembly at a first fluid level according to the disclosure.
Figure 3 shows, in cross-section, an example of a sensor assembly at a second fluid level according to the disclosure.
Figure 4 shows an example of a first sensor part that can be used in a sensor assembly according to the disclosure.
Figure 5 shows an example of a known assembly (Fig. 5A) and an assembly (Fig. 5B) according to the disclosure for comparison.

### DETAILED DESCRIPTION

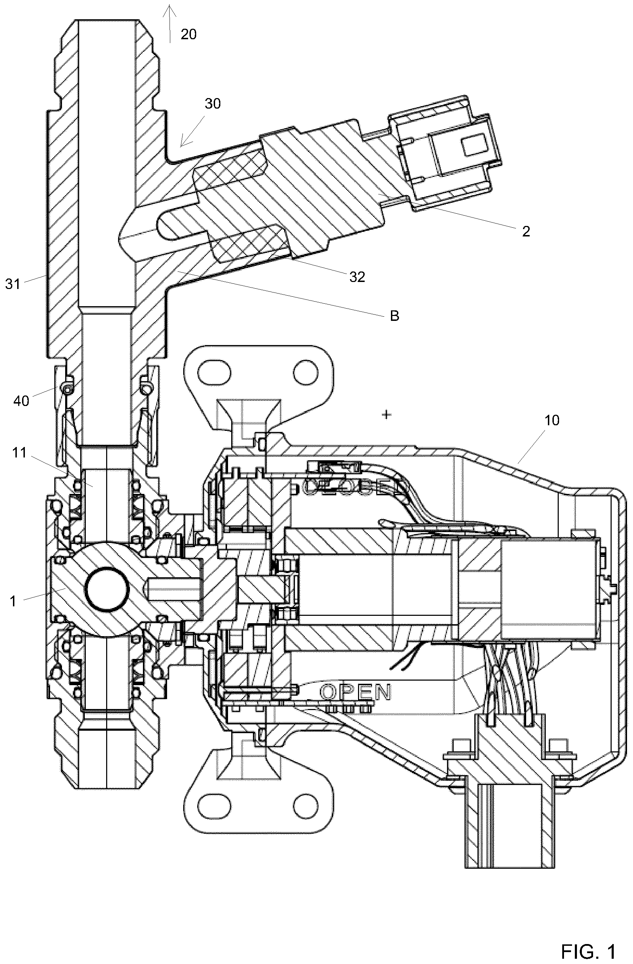

Referring first to Fig. 1, a known level sensor assembly will be described, by way of background only. The assembly comprises a valve 1 connected between a first part of a water system e.g. a reservoir (not shown) and another part of the water system e.g. waste pipe 20. Depending on the type of water system, the valve 1 may be a normally open valve or a normally closed valve. Opening and closing of the valve 1 is controlled based on a water level in the system detected by a water level sensor 2. For a normally open valve, the valve motor is commanded to close the valve if the sensor detects a water level above a given threshold. For a normally closed valve, the valve motor is commanded to open the valve if the sensor detect a water level above a give threshold. For the following description, a normally closed valve will be used, by way of example only. The same principles will, however, apply to a normally open valve.

As seen in the drawings, the level sensor 2 is mounted in a wye fitting 30 attached between the valve inlet 11 and the waste pipe 20. One branch 31 of the wye fitting 30 is in line with the waste pipe 20. The other branch 32 of the wye fitting extends from the first branch at an angle e.g. 45 degrees. The level sensor 2 is mounted in the second branch out of, but close to the flow of water through the waste pipe.

A connector e.g. a clamshell 40, described further below, joins the wye fitting 30 to the valve inlet 11.

In the example shown, while the waste pipe is empty, the valve 1 is closed. As water starts to fill the waste pipe it fills the main channel 31 of the wye fitting and is blocked by the closed valve 1. As more water flow into the waste pipe 20, and, thus the closed main channel of the wye fitting, it starts to fill the wye branch 32 where the sensor 2 is located. When the sensor is contacted by the fluid it sends a command signal to the motor 10 to cause the valve 1 to open. In a grey water system as mentioned above, for example, this then allows the accumulated water to be released into the flush system.

As mentioned above, one problem with such assemblies is that the wye fitting housing the sensor is somewhat large and heavy and add to the overall weight and envelope of the system. This is not desirable in applications where space and weight allowance are restricted such as in aircraft. A further problem, also as mentioned above, is that such conductive sensors will only detect conductive fluids such as water. Non-conductive fluids will not be detected and contaminated water will not be detected accurately. A further problem is that water may remain trapped in threads or an edge or corner B between the branches of the wye fitting 30 which can cause the sensor to respond on detection of that water regardless of the actual level of water in the waste pipe. This can therefore result in the wrong commands being sent to the valve.

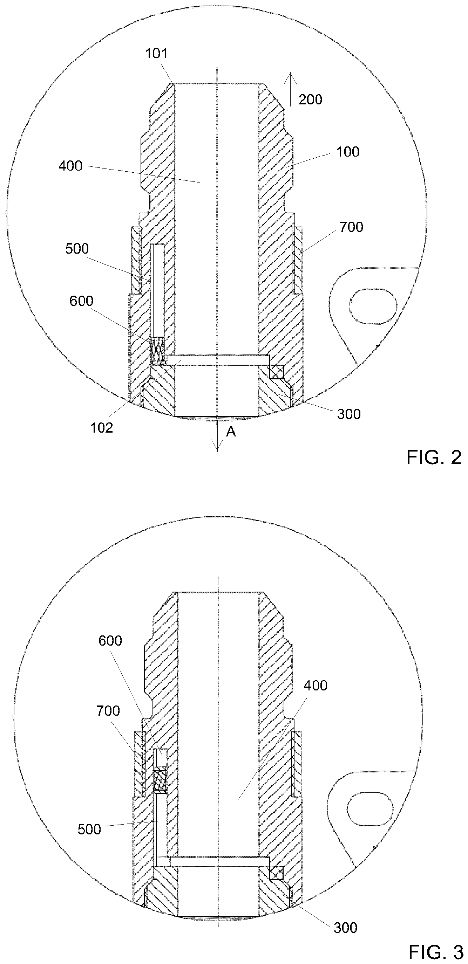

The assembly of the present disclosure replaces the wye fitting and conductive sensor with a new sensor assembly that is arranged in line with the flow of fluid through the system such that pressure of the fluid causes movement of one part of a sensor in relation to another part of the sensor such that the sensor is activated when the two parts are substantially aligned and are able to communicate with each other. This will be described in more detail, with reference to examples as shown in Figs. 2 to 5.

The sensor assembly according to the disclosure includes a tubular housing 100 arranged to be fitted into the flow path of the system between a fluid line such as a waste pipe 200 and an inlet 300 to a valve. The valve may be any know valve in a fluid system such as described about in relation to Fig. 1. For the description of this example, the valve will be a motorised valve 1' driven by a motor 10' with the valve inlet 300 in the fluid flow path of the fluid to be controlled and measured. The tubular housing 100 defines an axial flow channel 400 extending through the housing from a first end 101 to a second end 102, along an axis A, for fluid to flow from the fluid line of the system to the valve inlet 300. The sensor assembly housing 100 also has a sensor channel 500 extending from the second end 102 of the flow channel 400 towards the first end substantially parallel to, and in fluid communication with the axial flow channel 400. The length of the sensor channel from the second end 102 towards the first end can vary depending on the application and environment and may also vary depending on the type of fluid and expected range of fluid pressures in the system. A first sensor part 600 is located in the sensor channel such that it can move axially within the sensor channel responsive to pressure of the fluid in the flow channel acting on the first sensor part in the sensor channel. A second sensor part 700 is provided on the tubular housing 100 at an axial position between the second end 102 and the first end 101 selected such that when the fluid pressure is at a predetermined level, the first sensor part is at a position in the sensor channel adjacent the second sensor part such that the first and second sensor parts communicate with each other. In the example shown, the second part 700 is mounted to the outer surface of the housing e.g. by a threaded connection but the second sensor part may be mounted to the tubular housing in other ways.

In the example shown, the sensor parts form an RFID sensor, wherein the first sensor part is an RFID sensor tag component and the second sensor part is the RFID reader part. This has the advantage that no power needs to be provided to the first sensor part per se. Rather, when the first sensor part is within signal receiving range of the RFID reader 700, the signals from the reader power the first sensor part 600 which then returns a modified sensor signal to the reader. RFID sensing is known per se and the principles of RFID technology will not be described here in further detail. The reader can then provide a control signal to the valve motor to open/close the valve. Other types of sensor can, however, be envisaged that operate by a first sensor part moving, under fluid pressure, in the sensor channel, to come into range of the second sensor part at a predetermined pressure level indicative of a predetermined fluid level in the flow line. Even first sensor parts with their own power supply may be envisaged. As an example, other sensors that communicate using RF waves could be envisaged. In some applications, sensors such as optical, magnetic, proximity, etc. sensors could also be conceived provided their components are brought into communication due to the pressure of the fluid.

Figure 2 shows the assembly when the pressure of the fluid in the flow line is low which is representative of a low fluid level.

Initially, in a manner similar to that described above with reference to Fig. 2, the valve is closed and the level of fluid in the flow line and, therefore, in the flow channel 400 through the sensor housing 100 is low. This accordingly creates only a low pressure in the sensor channel 500 and the first sensor part 600 remains at a position in the sensor channel adjacent the second end of the flow channel 400. At this position, there is no communication between the first and the second sensor part as the first sensor part is out of range of the first sensor part. The sensor does not, therefore, generate any command signal to control operation of the valve.

As water fills the flow line and, therefore, the flow channel 400 of the sensor assembly (see Fig. 3), the pressure in the sensor channel 500 increases. This pressure pushes on the first sensor part 600 causing it to move along the sensor channel in direction X. When the first sensor part 600 is within communicating range of the second sensor part 700, this being indicative of the pressure and thus the fluid level reaching a predetermined value, the first and second parts communicate such that the second sensor part generates a command signal to control operation of the valve. In the example shown, for a normally closed valve, the signal will be such as to open the valve 1' and the fluid can flow through the valve - e.g. grey water can be drained.

Once the fluid level drops again, the pressure in the sensor channel will drop and the first sensor part will move down the sensor channel out of range of the second sensor part which will then stop sending a command to control operation of the valve.

In the example shown, the orientation is such that the sensor part moves in the sensor channel in response to the fluid level. The assembly may also work in other orientations but in that case, a spring may be required to return the first sensor part to its original position.

The shape and diameter of the channel should be selected according to the density of the fluid in the system and may also need to take into account and possible dirt or debris in the fluid to ensure accurate level sensing and, thus, accurate valve operation.

The first sensor part should be designed such that it can easily move in the channel responsive to changes in fluid pressure.

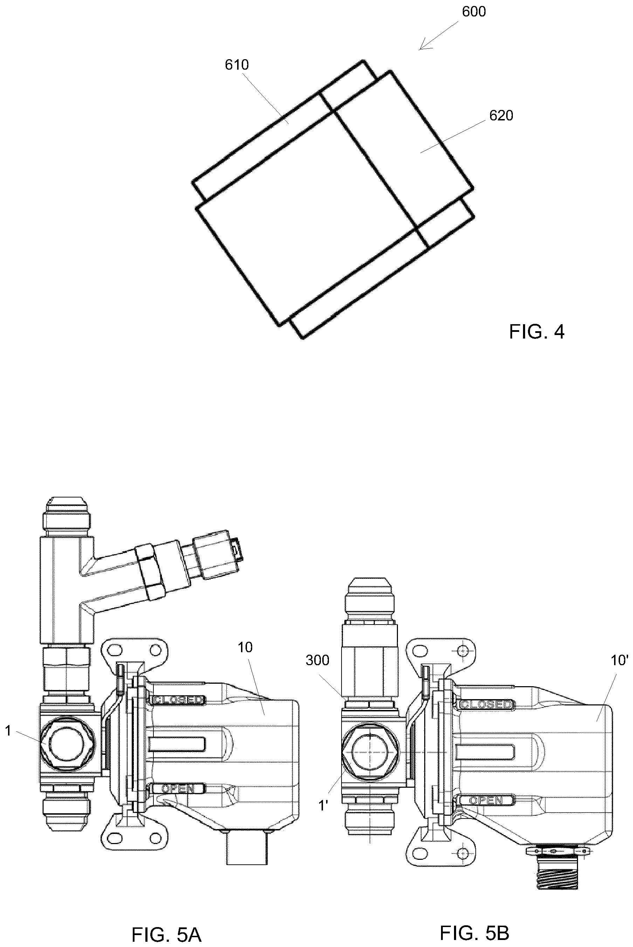

Figure 4 shows an example of a first sensor part 600 when the sensor assembly uses RFID sensor technology. In one example, to improve the movement of the first sensor part in the sensor channel and prevent it sticking, the first sensor part may have a sensor body 610 responsible for receiving, modifying and transmitting the signal from the reader 700, and a sleeve 620 around the body 610 which is made of or coated with a non-stick material such as Teflon ^{®} to ensure smooth movement of the first sensor part in the sensor channel. In other examples, however, the channel and/or the first sensor part can be otherwise designed and/or sized to ensure smooth movement.

Figures 5A and 5B show the conventional sensor assembly and a sensor assembly according to this disclosure by way of comparison. As can be seen, the design of this disclosure is much simpler and more compact than the existing assembly design. Further, as described above, the sensor of this disclosure is able to detect all types of fluid including oils, honey, water, contaminated water.

Whilst the assembly has been described in relation to a fluid system with a waste pipe such as a grey water system (e.g. in an aircraft), the principles of the assembly can be applied to any system in which fluid level sensing is needed to detect a predetermined fluid level and to operate a valve in response to the detected level.

## Claims

1. A fluid level sensor assembly comprising includes a tubular housing (100) arranged to be fitted into a fluid flow path of a system between a fluid line an inlet (300) to a valve (1'), wherein the tubular housing (100) defines an axial flow channel (400) extending through the tubular housing from a first end (101) to a second end (102), along an axis A, for fluid to flow from the fluid line of the system to the valve inlet (300), the tubular housing (100) further comprising a sensor channel (500) extending from the second end (102) of the flow channel (400) towards the first end substantially parallel to, and in fluid communication with the axial flow channel (400), wherein the assembly further comprises a first sensor part (600) located in the sensor channel such that the first sensor part can move axially within the sensor channel responsive to pressure of the fluid in the flow channel acting on the first sensor part in the sensor channel, and a second sensor part (700) provided on the tubular housing (100) at an axial position between the second end (102) and the first end (101) selected such that when the fluid pressure is at a predetermined level, the first sensor part is at a position in the sensor channel adjacent the second sensor part such that the first and second sensor parts communicate with each other.

2. A fluid level sensor as claimed in claim 1, wherein the first sensor part and the second sensor part form an RFID sensor.

3. A fluid level sensor as claimed in claim 2, wherein the first sensor part (600) is an RFID tag and the second sensor part (700) is an RFID reader.

4. A fluid level sensor as claimed in any preceding claim, wherein power is provided to the first sensor part responsive to it being in the position adjacent the second sensor part.

5. A fluid level sensor as claimed in any preceding claim, wherein the second sensor part (700) is threadedly mounted to the tubular housing.

6. A fluid level sensor as claimed in any preceding claim, wherein the first sensor part has a low friction outer surface.

7. A fluid level sensor as claimed in claim 6, wherein the low friction outer surface is provided by an outer sleeve around the first sensor part.

8. A fluid level sensor as claimed in claim 7, wherein the outer sleeve comprises Teflon ^{®}.

9. The fluid level sensor as claimed in any preceding claim, wherein the first and second sensor parts communicate to generate a command signal indicative of the first sensor part being in the position adjacent the second sensor part.

10. The fluid level sensor of claim 9, wherein the command signal provides an alert and/or controls a valve.

11. A fluid management system comprising a fluid flow path and a fluid level sensor as claimed in any preceding claim located in the fluid flow path.

12. A system as claimed in claim 11, further comprising a valve configured to open in response to the first sensor part being at the position adjacent the second sensor part.

13. A system as claimed in claim 12, wherein the valve is a motorised valve.

14. A system as claimed in any of claims 11 to 13, being a grey water system.

15. A system as claimed in claims 11 to 14, being a water system in an aircraft.
